**Europäisches Patentamt**

(19) **European Patent Office**

**Office européen des brevets**

(11) Publication number: **0 050 142**
**B1**

(12) **EUROPEAN PATENT SPECIFICATION**

(45) Date of publication of patent specification: **16.01.85**

(51) Int. Cl.⁴: **B 25 J 21/00, A 61 G 11/00**

(21) Application number: **81901153.7**

(22) Date of filing: **14.04.81**

(86) International application number:
**PCT/DK81/00038**

(87) International publication number:
**WO 81/02993 29.10.81 Gazette 81/25**

(54) **A LENGTH OF DISPOSABLE CUFFS AND A CUFF DISPENSER TO BE LOCATED ABOUT AND ACROSS INLET OPENINGS OF A CHAMBER WITH A CONTROLLED ATMOSPHERE.**

| | |
|---|---|
| (30) Priority: **21.04.80 DK 1685/80** | (73) Proprietor: **NESHEIM, Erik Christian Holger**<br>**1 Praestegärdsmarken, Nim**<br>**DK-8700 Horsens (DK)** |
| (43) Date of publication of application:<br>**28.04.82 Bulletin 82/17** | (72) Inventor: **NESHEIM, Erik Christian Holger**<br>**1 Praestegärdsmarken, Nim**<br>**DK-8700 Horsens (DK)** |
| (45) Publication of the grant of the patent:<br>**16.01.85 Bulletin 85/03** | |
| (84) Designated Contracting States:<br>**AT CH DE FR GB LI NL SE** | (74) Representative: **Lehn, Werner, Dipl.-Ing. et al**<br>**Hoffmann, Eitle & Partner Patentanwälte**<br>**Arabellastrasse 4 (Sternhaus)**<br>**D-8000 München 81 (DE)** |
| (56) References cited:<br>**US-A-1 626 308**<br>**US-A-1 954 139**<br>**US-A-2 695 605** | |

Courier Press, Leamington Spa, England.

## Description

### Technical Field

The present invention relates to a length of disposable cuffs to be located about and across inlet openings of a chamber with a controlled atmosphere, said openings being intended for introducing the hands of an attendant.

### Background Art

US patent specification No. 2,695,605 discloses an infant incubator with inlet openings and provided with a sleeve system. In this known sleeve system a cylindrical sleeve of fabric or plastics is mounted in such a manner that one opening thereof is located on a fixed flange about the hand-hole opening and the opposite opening thereof is located on a closure device mounted about the flange. When the closure device is turned the sleeve is opened and closed, respectively, like an iris. This known system is encumbered with the following drawbacks. The system is stationary, and since it must be replaced as a complete unit, this replacement is by routine repeated once a day. In use the known sleeve becomes still more contaminated during this period. In order to be cleaned both the flange and the closure device must be completely demounted, which is usually performed each time another patient is placed therein or once a week. The system requires much work in connection with the cleaning, which is also an unfortunate procedure from a bacteriological point of view. The price of the sleeves (Dkr. 25,- 30,-) excludes the possibility of using it as a disposable sleeve. When the attendant is to insert both hands into the incubator, it is necessary that another person closes the sleeve tightly about the attendant's wrists. From a functional point of view the known system has the advantage that it may be tightly closed about the wrist, whereby the climatic conditions are maintained within the incubator.

Another known system for closing the hand-hole openings of an incubator comprises some hatches which are simply opened, whereafter free access to the interior of the incubator is provided. This system has the drawback that when the hatch is opened, the climatic conditions within the chamber are changed, and since routine work each day is performed a considerable number of times for up to about 30 minutes, difficulties arise especially concerning the temperature, whereas a drop in the oxygen concentration and the moisture percentage may be partly compensated for through an increased flow, which, however, makes the system more expensive. From a bacteriological point of view, the system is better than the system described above since it is not necessary to touch parts of the incubator during the work. However, the hatches with openings and a locking system are so complicated that they can only be superficially cleaned.

### Disclosure of Invention

The object of the present invention is to provide a cuff and a cuff dispenser which in a simple manner may be located outside the inlet openings of a chamber with a controlled atmosphere, and which by use of disposable cuffs provide an almost optimal access system from a bacteriological point of view, said system to an essential degree preventing changes in the climatic conditions as well as in possible particular gas concentrations.

The cuff and the cuff dispenser according to the invention are characterised by the subject matter stated in claims 1 and 4. In this manner a cuff and a cuff dispenser are obtained which permit a quick application of always clean, sterile cuffs. The inventive cuff dispenser may furthermore be quickly detached and mounted on the smooth outer surface of the outer wall surface of the chamber in question, said wall surface upon removal of the cuff dispenser comprising no projecting surfaces and therefore being easy to clean. In use the attendant inserts his hand transverse through the tube-shaped disposable cuff of double sheet material which closes tightly about his wrist. After use the cuff surrounding the guide and retaining means is pulled out whilst advancing another fresh cuff from the storage box. Subsequently the used cuff is torn off, and the chamber is again closed air tight in this respect. Advantageous embodiments of the individual parts of the cuff and the cuff dispenser are described in the sub-claims.

### Brief Description of Drawings

Embodiments of the cuff and the cuff dispenser according to the invention will be described below with reference to the accompanying drawing, in which

Fig. 1 illustrates a section of a length of disposable cuffs of double sheet material,

Figs. 2 and 3 are front and sectional views of a first embodiment of a cuff dispenser according to the invention,

Figs. 4 and 5 are front and side views of a second embodiment of a cuff dispenser according to the invention,

Fig. 6 is a front view of a core plate for use in connection with the cuff dispenser of Figs. 4 and 5,

Fig. 7 is a side view of a front plate for use in connection with the cuff dispenser of Figs. 4 and 5,

Fig. 8 illustrates on a smaller scale a portion of an amended embodiment of the cuff dispenser of Fig. 4,

Figs. 9 to 11 are on a larger scale sectional views taken along the lines A—A, B—B, and C—C, respectively, of Fig. 8,

Fig. 12 illustrates an alternative embodiment of the dispenser of Figs. 2 and 3,

Fig. 13 illustrates a known incubator, on which the cuff dispenser according to the invention may be mounted upon removal of a known cuff dispenser,

Figs. 14 and 15 are front and side views of a third preferred embodiment of a cuff dispenser according to the invention,

Fig. 16 illustrates a section of a preferred embodiment of a length of disposable cuffs of double sheet material, and

Figs. 17 and 18 are front and side views of a core plate for use in connection with the cuff dispenser of Figs. 14 and 15.

Best Mode for Carrying Out the Invention

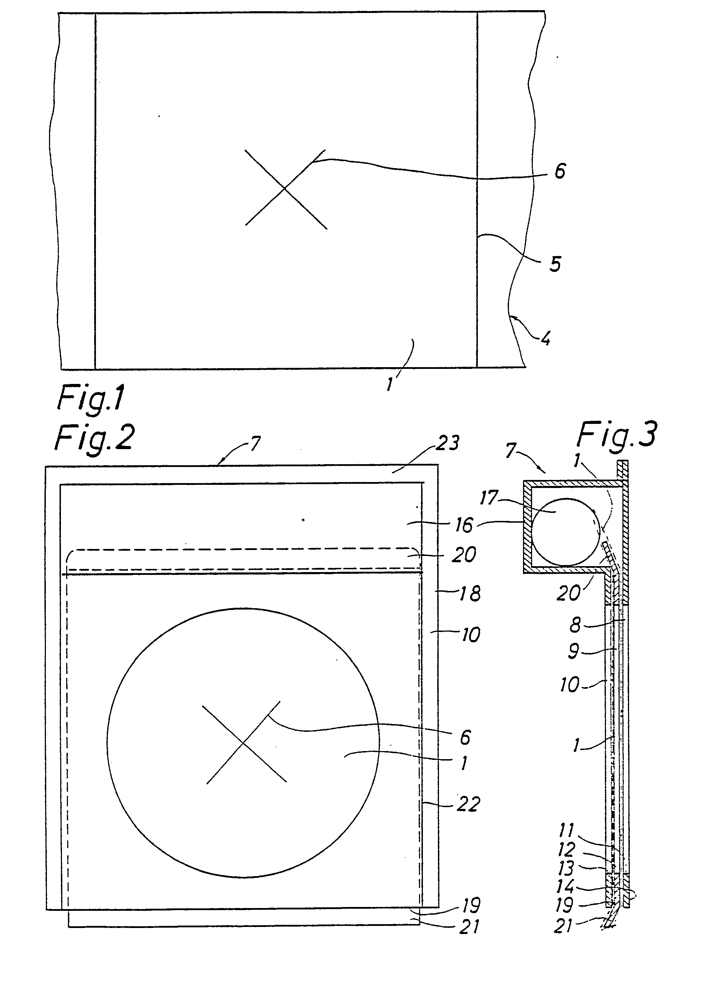

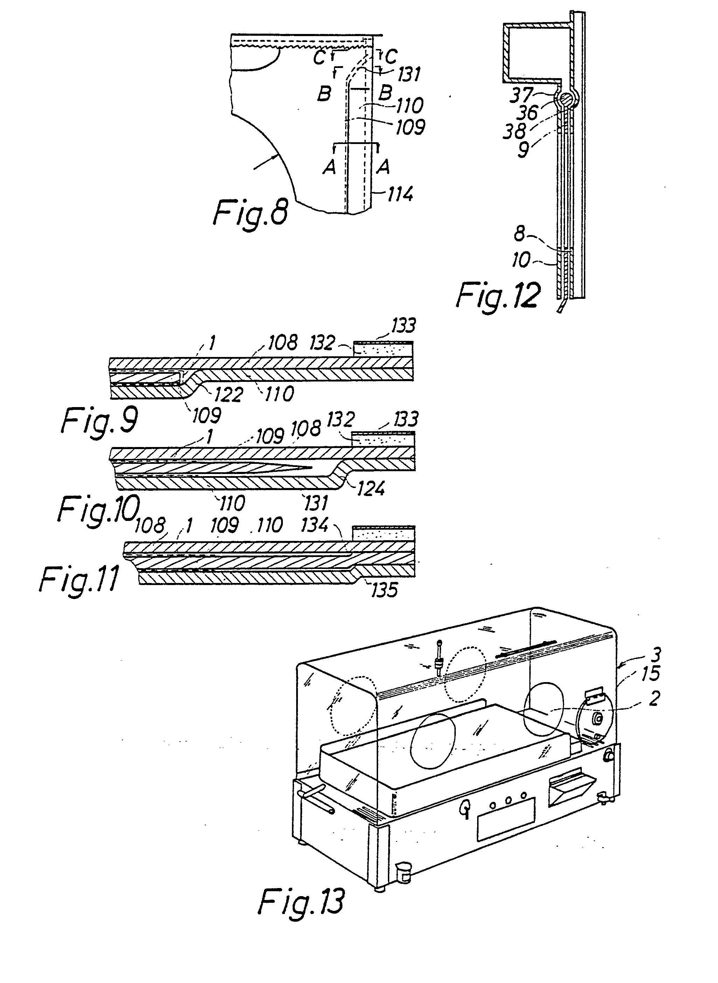

Fig. 1 illustrates a portion of a double length of disposable cuffs 1, only the top layer appearing. The cuffs are intended for a separate and quickly replaceable location in front of the hand-hole openings 2 of a chamber 3 with a controlled atmosphere, cf. Fig. 13. Such a chamber with a controlled atmosphere may for instance form part of the incubator illustrated in Fig. 13, said incubator for instance being of the type described in US patent specification No. 2,695,605. Another example of such a chamber with a regulated atmosphere is illustrated in US patent specification No. 2,600,240. Other chambers with a regulated atmosphere may be particularly shaped for chemical or biological tests, for use in connection with assembling of optical instruments, and for use within the electronic industry etc.

The disposable cuff 1 is shaped as a tube of clear, tough, resilient plastics, preferably of extruded high pressure polyethylene of a thickness of about 0.03 to 0.08 mm, preferably 0.04 to 0.06 mm, and most preferably about 0.05 mm. The disposable cuffs 1 are manufactured in a long double length 4 with indicated transverse tear-off lines or perforations 5 between each cuff 1. Opposing yield lines 6 are placed at a location, preferably at the middle of the lengths of the cuffs. These yield lines are for instance as indicated formed as a cross or as a circular section, a star or a polygon. It is preferred that the indicated yield lines 6 are hermetical prior to the intended perforation, which is performed by inserting the finger tips perpendicular to the stretched out length of sheet material in such a manner that the fingers hit the indicated yield lines.

Figs. 2 and 3 illustrate a first embodiment of a cuff dispenser 7. This cuff dispenser comprises a rear plate 8, a core plate 9, and a front plate 10. All these plates comprise a transverse hole 11, 12, and 13, respectively of substantially the same size as the hand-hole openings 2, i.e. that they for instance have a diameter of about 120 to about 170 mm, preferably 130 to 150 mm, and most preferably 140 mm.

Along the periphery the rear plate 8 comprises a securing and sealing member 14, which sealingly and detachably may secure the rear plate 8 to the outer surface of the wall 15 of the chamber 3 with the holes 11, 12, 13 opposite an opening 2. A simple securing member 14 is a double adhesive tape.

At one end the front plate 10 comprises a storage box 16, in which a roll 17 of cuffs 1 is provided, cf. the diagrammatical indication by a dotted line in Fig. 3. Along the two side rims 18, the front plate 10 is cranked (at the reference number 22), and there secured to the rear plate 8 for instance by welding. In this manner the rear plate 8 and the front plate 10 form a long, flat dispenser tube open to the storage box and comprising an orifice 19 located farthest off the storage box 16.

The core plate 9 is located in such a manner between the front and the rear plate of the flat dispenser tube that the front portion of the tube-shaped double length of cuffs is pulled over the core plate. At both ends the core plate 9 comprises a transverse bend or flange 20 and 21, respectively. The upwardly bent flange 20 at the end adjacent the storage box prevents the pulling out of the core plate and co-operates in guiding the tube-shaped length of double sheet material over the core plate. The upwardly bent flange 21 prevents the core plate from being disposed into the storage box, and the optionally serrated end rim thereof facilitates the tearing off of used cuffs.

A plurality of dispensers 7 are for use secured on the smooth outer wall surface 15 of the chamber 3 with the holes 11, 12, and 13 flushing with an opening 2. The cuff dispenser may be located as desired either in such a manner that the storage box is vertically situated to the side of the inlet opening or in such a manner that the storage box is horizontally located below the inlet opening according to the position the least preventing an observation of the chamber. If desired the dispenser may be shaped in such a manner that it comprises two parallel dispensers located side by side and having a single rear plate and with a particular storage box on both front plates. As a result only one complete dispenser need to be located in front of the two inlet openings of the incubator.

When a dispenser is located on the chamber, the attendant can by pressing his finger tips against the indicated yield lines 6 of the first cuff penetrate the tough, resilient plastic length and insert his hands into the chamber. The tough, resilient material ensures that the cuff sealingly closes about 10 cm behind the carpus. When finished the attendant pulls out his hand and by catching the free end of the cuff on the inclined rim of the guide, the length of cuffs is advanced until the next transverse perforation is situated on the rim of the flange 21 and the next cross with indicated yield lines is present in the middle of the hole. Subsequently a new cuff is advanced in front of the opening of the chamber in such a manner that it closes said opening air tight. Now the used cuff is torn off along the perforation with a support by the edge, and the system is again ready for use. The rim of the core plate 9 comprises preferably in the portion between the centre of the hole 12 and the tear-off flange 21 a plurality of notches 140.

The most advantageous positioning of these notches is determined by assembling a dispenser with a core plate without notches, fixing the double length at the tear-off flange 21, and penetrating and loading the cuff. The folds appearing in the double length are marked on the rim of the core plate, and the positioning of the notches is thereby determined according to the materials and tolerances employed. Since folds at the load are always positioned above the penetrating spot, the notches must be located in the rim portion present above a horizontal diagonal through the centre of the hole 12. That is, if the box is horizontally located below the hand-hole openings 2 of the incubator, these notches must be provided in the half of the core plate between the centre of the hole 12 and the tear-off flange 21, whereas the notches in case the storage box is vertically located must be provided in the entire upward rim of the core plate 9. By co-operating with the folds formed in the cuff 1 during use and load thereof these notches ensure in use that the cuff length of double sheet material is locked in its position. Instead of notches the rim of the core plate may be roughened.

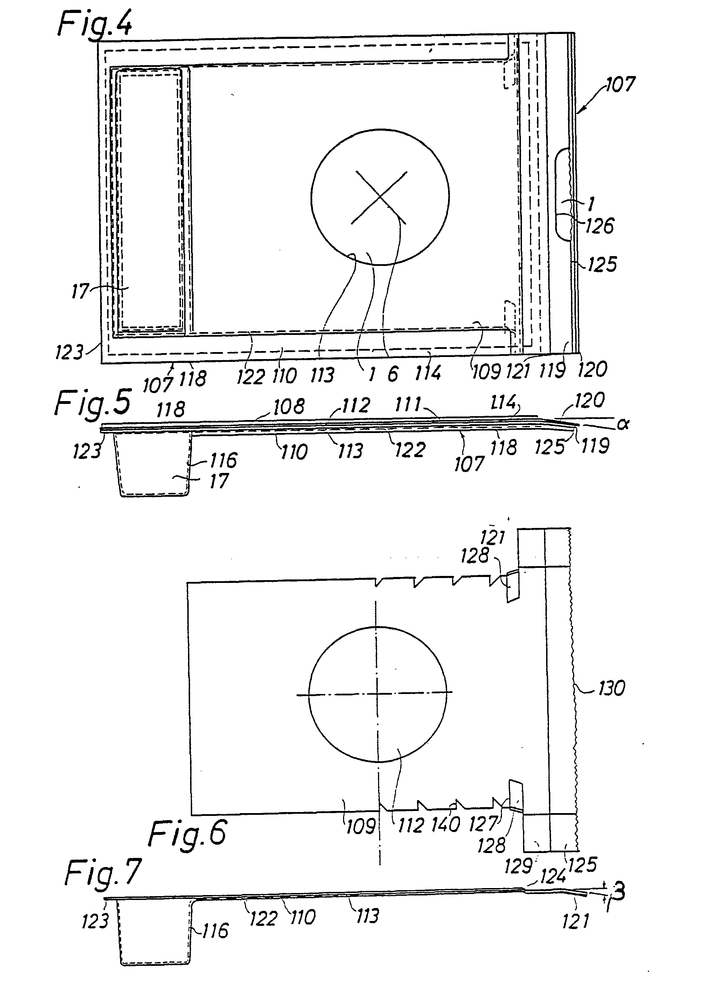

Figs. 4 to 7 illustrate a second embodiment of a dispenser 107. This dispenser also comprises a rear plate 108, a core plate 109, and a front plate 110. Each plate comprises a transverse hole 111, 112, and 113, respectively, of substantially the same size as the hand-hole openings 2 of the chamber 3, i.e. between about 120 mm and about 170 mm.

On the surface of the rear plate 108 facing the outer wall surface of the chamber 3, the rear plate comprises a securing and sealing member 114 along its entire periphery, e.g. in the form of a narrow pad of resilient material preferably of foam plastic. This foam plastic is on the side facing the wall 15 coated with an adhesive. which may retain the rear plate 108 and consequently the dispenser 107 detachably to the wall 15 of the chamber 3. This adhesive must possess a lesser binding strength than the binding agent used for securing the narrow pad to the rear plate 108. For cleaning purposes it is preferred that the adhesive is water-soluble, and it may for instance be "Bostik 36"®. In a second embodiment the pad may be omitted whereby only the securing and sealing member 114 forms the adhesive tapes. These adhesive tapes are directly applied to the back of the dispenser 7 along the rims and are covered by a detachable, not shown, protecting film coating or a plastic. Upon removal of the protecting coating, the dispenser may be detachably secured on an incubator by being pressed against the outer wall thereof. The resiliency of the plastics used is sufficient to adapt the dispenser to the plate surface of the incubator. The binding strength is good and proved through tests to be able to withstand the influences usually expected in use. The binding strength is not greater than an empty dispenser can easily be removed. The adhesive residues were easily removed by means of water and soap. At the dispenser end, the rear plate comprises an upwardly bent transverse flange 120 bent an angle $\alpha$ outwards in a direction away from the wall 15. The angle $\alpha$ is between 10° and 20°, preferably between 12° and 17°, and most preferably about 15° for a purpose described below.

At one end the front plate 110 comprises a storage box 116 containing the roll 17. A short distance within the longitudinal side rims 118 the front plate 110 is cranked at 122. Along the side rims 118 and the rim 123 and behind the storage box the front plate is welded or glued to the rear plate 108 in such a manner that a flat dispenser tube is formed between the cranks 122. This dispenser tube is defined by the rear plate 108 and the front plate 110, and it comprises a narrow oblong opening to the storage box 116 and a flat orifice 119. A short distance within the orifice 119 and parallel thereto the front plate is further cranked at 124, cf. Fig. 7, for welding or glueing of the core plate 109, cf. below. The orifice of the front plate is bent an angle $\beta$ to form a transverse flange 121. The angle $\beta$ is smaller than the angle $\alpha$, e.g. 4—6°, and preferably 5° smaller than the angle $\alpha$. A recess 126 is provided in the middle of the transverse orifice flange 120, said recess permitting both an easy catching and pulling out of the cuffs 1 into the correct position and a closing of the opening 2.

In the flat dispenser tube between the front and the rear plate, the core plate 109 is located a short distance both from the front and the rear plate and from the interior limits of the crank 122. The front cuff 1 of the tube-shaped cuff length 4 is pulled over the major portion of the core plate and to the orifice 119. A short distance within the orifice end, the core plate comprises in both sides a transverse or obliquely extending recess 127 comprising knives 128 for cutting the cuff tube during the pulling out, whereby the pulling out is considerably facilitated. Between the recesses 127 and the orifice, the core plate comprises two projections 129 protruding to both sides. The outer portions of these projections are welded or glued to the inner surface of the front plate 110 at the cranks 124. As a result, the core plate is secured in such a manner that a narrow, wide slot on both sides of the intermediary portion of the core plate for introduction of the tube-shaped cuffs 1. Further towards the orifice, the core plate is bent an angle $\alpha$ upwards to a transverse flange 125 in such a manner that at this spot the core plate follows the flange 120 of the bottom surface. Since $\alpha$ is greater than $\beta$, a squeezing effect is provided between the front plate and the core plate, said squeezing effect co-operating in retaining a succeeding cuff at the tearing off of a used cuff. In order to facilitate the tearing off, the core plate alone or both the core and the front plate may comprise a line of teeth 130. The upwardly bent flanges 120, 121, and 125 at the orifice form a long catching surface, whereby the entire dispenser may be torn off the wall 15 of the chamber 3. In order to lock the cuff 1 during use, an arbitrary number of notches 140 may for instance be formed in the two longitudinal rims of the core plate 109. One limit line of these notches is preferably located substantially perpendicular to the rim, and the second limit line thereof forms an angle of preferably not more than 50° with the first limit line. This second limit line furthermore inclines towards the tear-off flange 121 in such a manner that the notches present no resistance against pulling out of the cuffs. Both rims may optionally be provided with notches 130 or just be rough in their entire length. The embodiment illustrated in the drawing has proved to be suited for a load of the double length of up to 6 kg, whereby the materials used in this connection were polyvinyl chloride of 1 mm for the core plate, and high pressure polyethylene sheet of 0.05 mm for the cuff.

Figs. 8 to 11 illustrate a variation of the embodiment illustrated in Figs. 4 to 7. In this embodiment the knife has been replaced by a curved, sharpened rim or edge 131, which may optionally be formed like a serrated cutting edge. Figs. 9 to 11 are sectional views of the permanent connections between the plates 108—110, said connections being rendered possible through the cranks 122, 124, 134, 135. Furthermore, the cutting of the tube-shaped cuff 1 of sheet material is illustrated together with the securing means in the form of a foam plastics pad 132. This pad is permanently secured to the rear plate, which on the side turning therefrom comprises a coating of a detachable, pressure-sensitive adhesive preferably being water-soluble and e.g. being "Bostik" 36®.

Fig. 12 illustrates a variation of the embodiment of the cuff dispenser illustrated in Figs. 2 and 3. In this embodiment the flange 20 projecting into the storage box has been replaced by a thickening 36 with a guttiform or a circular cross section and surrounded by two corresponding swellings 37, 38 in the front plate 10 and the rear plate 8, respectively. A securing and sealing member of the type illustrated in Figs. 9 to 11 is located on the rear plate 8.

The material used for the various plates is preferably a clear, hard plastics such as for instance polyvinyl chloride. The plate may be manufactured through vacuum forming or preferably through die casting.

Beyond the illustrated securing means it is obvious to a person skilled in the art that also other securing means may be employed. These means may for instance be mechanical securing members such as pressure buttons, whereby preferably the female part is secured to the rear plate and the male part is secured to the outer side of the wall 15 of the chamber 3, the male part being easier to clean. It is also possible to use strips such as for instance so-called Velcro tapes, which, however, make the cleaning more difficult, but which facilitate the quick removal of an empty dispenser. In this manner a quick removal of dispensers may be performed, which is of particular importance in connection with surgical operations of a child in an infant incubator. Oblong snap lock-like catching means of plastics may also be used.

It is to be noted that the second embodiment in practice is used in the same manner as the first manner of use described. The present invention thus provides a cuff dispenser for closing chambers with a controlled atmosphere, whereby a disposable cuff is used. As a result the system according to the invention provides an almost optimal security from a bacteriological point of view. Since a close contact is present between the two lengths of the cuff and the surface of the hand and the wrist, respectively, during the entire inserting and pulling out procedure, changes in the climatic conditions as well as in possible, particular gas concentrations are prevented. The cuff dispenser permits a very quick insertion and pulling out of the hand, which is work-saving and of great importance during operations. Furthermore this dispenser is work-saving with respect to the fact that the entire chamber is easier to clean, a cuff dispenser only needing to be torn off and optionally thrown away, whereafter the incubator on the outer side comprises nothing but smooth surfaces which facilitates the cleaning essentially.

It is expected that a cuff dispenser for use in connection with for instance relatively healthy babies such as prematurely born babies, must comprise about 30 disposable cuffs, said number covering the daily consumption.

Compared to the prior art the cuff dispenser according to the invention is work-saving since only one person need to use the cuff, whereas known cuffs of the art dealt with in US patent specification No. 2,695,605 require at least two persons for a sterile insertion of a hand.

When a cuff for a long period only has been used for covering the hand-hole opening of an incubator, the outward surfaces of the cuff are not long sterile. When a sterile cuff is needed, the cuff not yet used for inserting the hand only has to be pulled out and the succeeding cuff is then used for inserting a hand into the incubator. When an increased guarantee is desired that only sterile cuffs are used, a length without indicated yield lines may be inserted between each cuff.

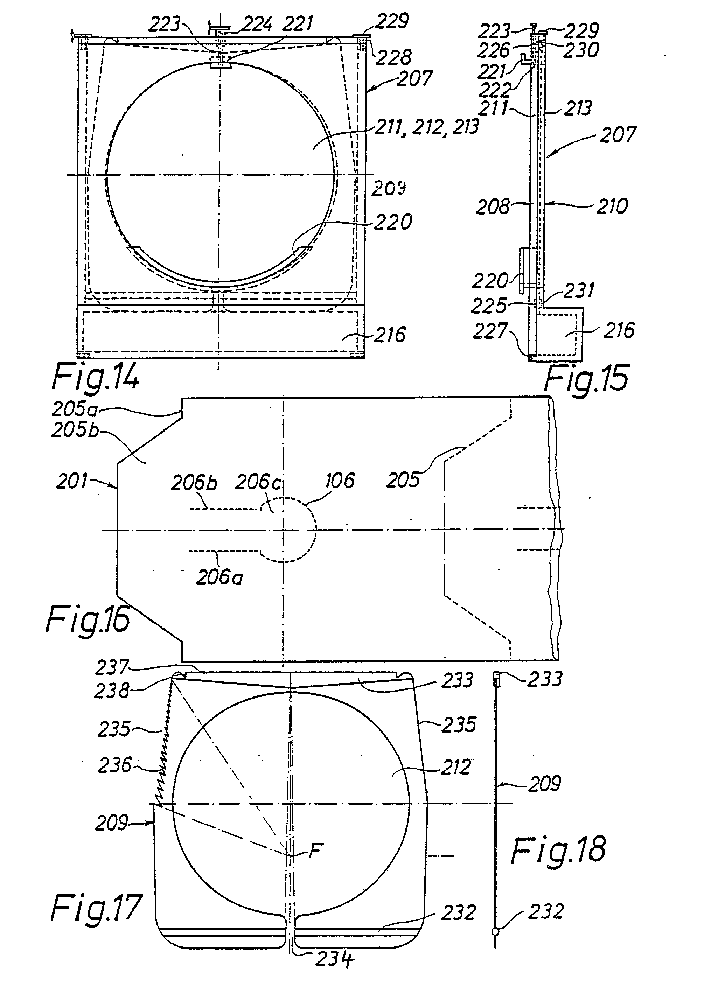

The presently preferred embodiment of the cuff dispenser 207 is illustrated in Figs. 14 and 15, whereby the associated tubular double length 204 of disposable cuffs 201 appears from Fig. 16, and the associated core plate 209 appears in details from Figs. 17 and 18.

The rear plate 208 of the cuff dispenser 207, cf. Figs. 14 and 15, comprises a transverse hole 211 and at the bottom thereof a circular arc-shaped hook 220 formed so as to catch the rim of the hand-hole opening 2, cf. Fig. 13. At the top, a corresponding circular arc-shaped hook 221 with a hole 222 is shaped in such a manner that the hook 221 may be displaced by means of a spring-loaded pawl 223 for fixing the dispenser 207 to the chamber 3, cf. Fig. 13. The pawl 223 is located in a bushing 224 for axial displacing, said bushing being moulded in the rear plate. Other mechanical, e.g. helical or snap lock-like, fastening means may be used. At both ends of the rear plate 208, transverse recesses 226, 225 are provided, the purpose thereof appearing later on.

At the bottom of the rear plate 20, a hinge projection 227 is mounted on which the front plate 210 is hinged. The lower end of the front plate 210 is formed as a storage box 216 for a roll, not shown, of disposable cuffs 201, and furthermore a transverse hole 213 is provided. For locking the front plate 210 to the rear plate 208, mutually engaging catching means are provided at the upper ends of the plates. In the present embodiment, this catching means is indicated as a knob 228 formed integral with the rear plate. A screw 229 extends through the knob through a hole therein and engages a threaded hole in the front plate. Other mechanical securing means such as for instance spring-loaded members, snap lock or bayonet sockets may be used. Along the rims the front and the rear plate closely abut each other, whereas the intermediary portions are thinner to form a spacing capable of receiving the core plate 209. Opposite the recesses 225, 226 in the rear plate, corresponding recesses 230, 231 are formed in the front plate.

The core plate 209 is loosely located in the spacing formed between the front and the rear plate completely surrounded by the first cuff of the tubular double length 204. In the spacing the core plate is retained by means of two oblong, transverse guide knobs 232, 233 located at both ends of said core plate. These guide knobs 232, 233 rest in the recesses 226, 230 and 225, 231, respectively, of the front and the rear plate. In practice these knobs turned out not to prevent the drawing-out of the double length 204, since the friction between acryl or polyvinyl chloride plastics used for the diameter and the polyvinyl chloride plastics used for the double length is insignificant. As illustrated, the guide knob 233 is V-shaped, which ensures the correct positioning of the core plate when load is applied.

Tube foils of the art described are produced with tolerances of $\pm 3$ mm optionally $\pm 2$ mm. The core plate must consequently be shaped in such a manner that it functions satisfactorily with all foil widths between for instance 197 and 203 mm. The illustrated core plate 209 has therefore a width of 200 mm as its greatest width, said width functioning satisfactorily at foil widths from 201 to 203 mm. At widths between 197 and 201 mm, the slit 234 illustrated in Fig. 17 provides the core plate with an appropriately springy effect in such a manner that even the smallest dimension may be pulled out without any particular resistance.

In the previously described core plates it is necessary with a very steep increase for taking account to the angle of the knives relative to the foil. This implies that the previously described foil can only be advanced by pulling in each corner with one hand, which is rather laboriously, especially when using two cuff dispensers located side by side. It is natural to use one hand only and subsequently to crumple the foil when catched. This implies that the upper portion of the foil becomes narrower. The core plate 209 illustrated in Figs. 17 and 18 is adequately pointed so that this procedure may be carried out.

It turned out to be advantageous to provide the side rims 235 with cuts 236 of a uniformly increasing size, cf. the left portion of Fig. 17. When inserting the hand through the perforation of yield lines of the foil the foil is stretched about the individual points in such a manner that it is fixed, and subsequently at the load of the arm the foil is stretched downwards. The centre of the pull F is about 40 mm below the centre of the hole. When the lower line of each cut is directed towards the point F, it is achieved that the foil even at a very heavy load is only perforated by the outer points, and not cut as a unit.

On the upper rim 237 of the core plate two cuts 238 appear which retain the foil at the tearing off procedure. When tearing off to the right or left side, the foil is catched by the vertical side rim instead of sliding towards the centre.

In both lengths of the tubular double length 204, cf. Fig. 16, yield lines 206 are indicated in the form of circular arcs, which provides a high strength against unintentional loads. At the two ends of the circular arc, the yield line 206 has been extended with two yield lines 206a and b extending parallel to and at a distance from the central line of the double length 204. In this manner it is ensured that the flap 206c ejected by the penetration sticks to the cuff 201 and is pulled out together therewith. Furthermore it is ensured that the opening formed by the penetration in emergency situations may be enlarged and provide a greater freedom of movement within the incubator. Since the cuff dispenser is usually located in such a manner that the storage box is at the bottom, an upward movement of the wrist penetrates the lines 206a and b.

The tear-off line 205 is shaped in such a manner that when the yield line 206 is in the centre of the hand-hole opening 2, cf. Fig. 13, the tear-off line 205a flushes with the upper rim 237 of the core plate 209, whereas the trapezoidal portion 205b hangs freely for catching. In this manner the tearing off is facilitated, since the outer point on the tearing off line mostly loaded is aligned with the upper rim of the core plate. At the same time the noise level at the tearing off is lowered.

This embodiment of the cuff dispenser is particularly suited when for economical reasons it is desired not to dispose a dispenser completely functional per se, but only to re-fill the dispenser with cuffs. Of course the dispenser becomes more expensive thereby but the total expenses are essentially lower. Beyond the above, the cuff dispenser 207 is suited for mechanical securing on the surface of an incubator, which for easier cleaning should be completely free from mechanical devices. The permanent hook or collar supporting the dispenser in the downward direction as well as the displaceable locking collar which may be displaced by means of a screw or a pawl extending into a bushing, are one possibility of securing the cuff dispenser. When positioning the cuff dispenser it is advantageous to locate the storage box at the bottom of the incubator, whereby a free observance of the interior of the incubator is not prevented. Since the front plate may be swung downwards, the insertion of a new roll of cuffs is facilitated, since the downward rim of the storage box swings inwards and rests against the wall of the incubator in such a manner that a substantially horizontal surface is obtained for use as support during the insertion of the new roll of cuffs. If desired, the cuff dispenser 207 may be provided with foam rubber strips for sealing the surfaces of the rear plate facing the incubator.

## Claims

1. A length of disposable cuffs to be located about and across inlet openings (2) of a chamber (3) with a controlled atmosphere, said openings being intended for introducing the hands of an attendant, characterized in that the disposable cuffs (1) are of double sheet material of the type being capable of stretching at perforation and insertion of the hand and subsequently closing tight to the wrist or arm and are produced in long lengths as a flattened tube and cut to handy lengths (17) comprising a plurality of disposable cuffs, that tear-off lines (5) are provided between the individual cuffs and across the longitudinal direction of the tube, and that yield lines (6) are indicated in each length, preferably substantially in the middle of each cuff, whereby said yield lines may be two lines crossing each other or be polygonal, circular or star-shaped, and whereby they are preferably shaped as a circular arc with short, straight yield lines (206a, 206b) extending from the ends of the circular arc and parallel to and at a distance from the central line of the double length (204).

2. A length as claimed in claim 1, characterised in that the double sheet material is a tough, resilient material and preferably being high pressure polyethylene in tube-shape, said sheet material having a thickness of 0.03—0.08 mm, preferably 0.04—0.06 mm and most preferably about 0.05 mm, and whereby the indicated yield lines (6) in the form of diagonal lines crossing each other preferably are of a length of between 2 and 5 cm, preferably about 3 cm.

3. A length as claimed in claim 1, characterised in that said tear-off lines (205) extend across the length so that a trapezoidal portion (205b) for gripping is formed on a cuff when a previously used cuff is torn off and that also at each side of the cuff (201) short tear-off lines are formed for easing the tearing off.

4. A cuff dispenser to be located about and across inlet openings (2) of a chamber (3) with a controlled atmosphere, said openings being intended for introducing the hands of a person, characterised in that the dispenser (7; 107; 207) comprises a storage box (16; 116; 216) with a supply (17) of a handy length of tube-shaped disposable cuffs (1; 201) of double sheet material, a flat dispenser tube (8, 10; 108, 110; 208, 210) connected with the storage box and comprising an internal cuff guide and retaining means (9; 109; 209) surrounded by the cuffs, whereby holes (11, 12, 13; 111, 112, 113; 211, 212, 213) extending across the dispenser tube and located both in the wide, flat wall plates (8, 10; 108, 110; 208, 210) of the dispenser tube and in the guide and retaining means (9; 109; 209), said holes being of substantially the same dimension as the inlet openings (2) of the chamber (3), and securing and sealing members (14, 114; 220, 221) for detachably and sealingly securing the dispenser (7; 107; 207) to the smooth, outer surface of the wall (15) of the chamber (3) and surrounding at least one of the inlet openings (2) of the chamber (3).

5. A cuff dispenser as claimed in claim 4, characterised in that the flat dispenser tube comprises a rear plate (8; 108) and a front plate (10; 110) secured to said rear plate along three rims (18, 23; 118, 123) preferably through welding or glueing, and cranked (at 22; 122) to form the flat tube, whereby the storage box (16; 116) forms part of the front plate (10; 110).

6. A cuff dispenser as claimed in claims 3 and 4, characterised in that the guide and retaining means is a core plate (9), the rims (20, 21) of which projecting from the end of the storage box and the orifice end, respectively, of the dispenser tube, are bent upwards and shaped so as partly to form a guide surface (20) and a tear-off rim (21), respectively, for the cuffs (1) passed across the core plate, and partly to form means for loosely retaining the core plate at a distance both relative to the rear and to the front plate (8, 10) respectively.

7. A cuff dispenser as claimed in claims 4 and 5, characterised in that the guide and retaining means is a core plate (109), which at a short distance within the orifice (119) comprises a cranked projection (129, 134) projecting to the sides for securing, preferably through welding or glueing, to the rear plate (108) and to a corresponding crank (135) on the front plate (110), respectively, in such a manner that the major portion of the core plate (109) is secured at a distance both relative to the rear and to the front plate, said core plate (109) preferably comprising side rims being rough or provided with notches (140).

8. A cuff dispenser as claimed in claim 7, characterised in that a sharp edge is located in both sides of the core plate (109) immediately within the projection (129), said edge for instance either being shaped in the core plate by shaping an optionally serrated cutting edge (131), preferably curving slightly outwards in the core plate (109), said edge extending into the cranked projection (129, 134), or being a knife (128) located in a transverse or inclined recess (127) immediately adjacent or a short distance within the cranked projection (129, 134), and whereby the core plate (109) preferably comprises side rims being rough or provided with notches (140).

9. A cuff dispenser as claimed in claim 7, characterised in that the rear plate (108) and the core plate (109) at the orifice end are defined by an upwardly bent transverse flange (120, 125) bent an angle $\alpha$ upwards from the plane of the rear and the core plate, respectively, and that the front plate (110) at the orifice end is defined by a transverse flange (121) bent an angle $\beta$ upwards from the plane of the front plate, whereby $\alpha$ is greater than $\beta$ and whereby $\alpha$ is between about 10° and about 20°, preferably between 13° and 18°, and most preferably 15°, and whereby $\beta$ is 4—6° smaller than $\alpha$ and preferably is about 5° smaller than $\alpha$.

10. A cuff dispenser as claimed in claim 4, and one or more of the claims 5 to 9, characterised in that the securing and sealing member is an adhesive strip or an adhesive tape (14) comprising an adhesive coating on both sides, and whereby the tape preferably comprises foamed plastics, preferably with closed pores, and whereby the adhesive layer used for securing the cuff dispenser to the wall (15) of the chamber (3) possesses such an adhesiveness to the wall that the dispenser (7) may be reliably secured and upon use be removed therefrom and is preferably water-soluble.

11. A cuff dispenser as claimed in claim 4 and one or more of the claims 9 to 10, characterised in that the securing and sealing member comprises a spacing and sealing layer located on the rear plate (109) and along the entire periphery thereof, said layer for instance being of foamed plastics, and mechanical securing members such as for instance press buttons, preferably of the type whereby the female part is secured to the rear plate and the male part is secured to the outer side of the wall of the chamber (3), or Velcro tapes permanently secured to both the rear plate and the wall, or oblong snap lock-like catching means of plastics with a slightly curved and pointed projection protruding from the wall (15) and a corresponding holding member with apertures located on the rear plate (8; 108).

12. A cuff dispenser as claimed in claim 4, characterised in that the flat dispenser tube is formed between a rear plate (208) and a front plate (210) which by means of a hinge (227) at the storage box (216) is pivotably secured to one transverse rim of the rear plate and when used is secured adjacent the rear plate by means of co-operating locking means (228, 229).

13. A cuff dispenser as claimed in claims 4 and 12, characterised in that the guide and retaining means is a core plate (209) shaped in such a manner that when introduced into the front cuff (201) it is retained in a flat spacing formed between the rear plate (208) and the front plate (210).

14. A cuff dispenser as claimed in claim 13, characterised in that the core plate (209) comprises oblong, transverse, guide knobs (232, 233) engaging corresponding transverse recesses (225, 226, 230, 231) in the rear and the front plate, respectively, of which one knob (233) and the corresponding recesses (226, 230) are preferably V-shaped to retain the core plate when the load is applied.

15. A cuff dispenser as claimed in claim 13 and/or claim 14, characterised in that a slit (234) extends from the hole (212) of the core plate (209) to the rear edge thereof in such a manner that the core plate may be adapted to lengths of a varying width.

16. A cuff dispenser as claimed in claims 13, 14, and/or 15, characterised in that the core plate (209) along substantially half of its side rims (235) is pointed and preferably comprises cuts (236) of a uniformly increasing size towards the middle of the core plate.

17. A cuff dispenser as claimed in claims 12, 13, 14, 15, and/or 16, characterised in that cuts (238) are shaped in the upper rim (237) of the core plate (209) in the knob (233), said cuts facilitating the tearing off of a removed used cuff (201).

18. A cuff dispenser as claimed in claim 12, characterised in that mechanical securing members (220, 221, 222, 223) are mounted on the rear plate (208) for detachably securing the dispenser (207) to the rim of the inlet opening (2) during the sealing.

**Revendications**

1. Bande de manchettes à jeter après usage, à placer autour et à travers des ouvertures d'entrée (2) d'une chambre (3) à atmosphère contrôlée, ces ouvertures étant destinées à permettre l'introduction des mains d'un opérateur, caractérisée en ce que les manchettes à jeter (1) sont en matière à feuille double du type capable de s'étirer au moment d'une perforation et de l'introduction de la main et ensuite de se refermer de manière étanche sur le poignet ou le bras et en ce qu'elles sont réalisées en grandes longueurs comme un tube aplati et coupé en longueurs commodes (17) comprenant une pluralité de manchettes à jeter, cependant que des lignes de déchirement (5) sont prévues entre les manchettes individuelles transversalement à la dimension longitudinale du tube et que des lignes de rupture (6) sont indiquées sur chaque bande, de préférence substantiellement au milieu de chaque manchette, lesdites lignes de rupture pouvant être deux lignes se croisant l'une l'autre ou être des lignes polygonales ou circulaires ou en étoile et ayant de préférence le profil d'un arc de cercle avec de courtes lignes droites de rupture (206a, 206b) s'étendant à partir des extrémités de l'arc de cercle et parallèlement, avec une distance d'écartement, à l'axe de la bande double (204).

2. Bande selon la revendication 1 caractérisée en ce que la matière en feuille double est une matière tenace, élastique, de préférence en polyéthylène haute pression en tube, cette feuille ayant une épaisseur de 0,03 à 0,08 mm, de préférence 0,04 à 0,06 mm et plus avantageusement de 0,05 mm environ, les lignes de rupture indiquées (6) étant des lignes en diagonale se croisant l'une l'autre et ayant de préférence une longueur comprise entre 2 et 5 cm, de préférence 3 cm envirion.

3. Bande selon la revendication 1, caractérisée en ce que les lignes de déchirement (205) s'étendent en travers de la bande de telle sorte qu'une partie trapézoïdale (205b) de préhension est formée sur une manchette quand une manchette précédente utilisée a été déchirée et que, aussi, sur chaque côté de la manchette (201) de courtes lignes de déchirement sont formées pour faciliter le déchirement.

4. Distributeur de manchettes à placer autour et en travers d'ouvertures d'entrée (2) dans une chambre (3) à atmosphère contrôlée, ces ouvertures étant destinées à permettre l'introduction des mains d'une personne, caractérisé en ce que ce distributeur (7; 107; 207) comprend une boîte de stockage (16; 116; 216) avec une quantité (17) d'une longueur commode de manchettes tubulaires à jeter après usage (1; 201) en matière à double feuille, un tube plat de distribution (8, 10; 108, 110; 208, 210) relié à la boîte de stockage et comprenant une guide intérieur des manchettes et des moyens de retenue (9; 109; 209) entourés par les manchettes dans lesquels des ouvertures (11, 12, 13; 111, 112, 113; 211, 212, 213) s'étendant en travers du tube de distribution se trouvent à la fois dans les parois planes et larges (8, 10; 108, 110; 208, 210) du tube de distribution et dans les moyens de guidage et de retenue (9; 109; 209), ces ouvertures étant substantiellement de la même dimension que les ouvertures d'entrée (2) de la chambre (3), des organes de fixation et d'étanchéité (14, 114; 220, 221) retenant de manière détachable et étanche le distributeur (7; 107; 207) à la surface extérieure lisse de la paroi (15) de la chambre (3) et entourant au moins l'une des ouvertures d'entrée (2) de cette chambre (3).

5. Distributeur de manchettes selon la revendication 4 caractérisé en ce que le tube plat de distribution comprend une plaque arrière (8; 108) et une plaque avant (10; 110) fixée à la plaque arrière le long de trois bords (18, 23; 118, 123) de préférence par soudure ou par collage et déportée (en 22; 122) pour constituer le tube plate, de sorte que la boîte de stockage (16; 116) fait partie de la plaque avant (10; 110).

6. Distributeur de manchettes selon les revendications 3 et 4 caractérisé en ce que les moyens de guidage et de retenue comprennent une plaque interne (9) dont les parties extrêmes (20, 21), qui s'étendent par la sortie de la boîte de stockage et par l'orifice de sortie du tube de distribution respectivement, sont incurvées et profilées pour constituer en partie une surface de guidage (20) et un bord de déchirement (21), respectivement, pour les manchettes (1) qui ont passé le long de la plaque interne et en partie des moyens pour retenir librement la plaque interne à distance à la fois de la plaque arrière et de la plaque avant (8, 10) respectivement.

7. Distributeur de manchettes selon les revendications 4 et 5 caractérisé en ce que les moyens de guidage et de retenue comprennent une plaque interne (109) qui présente à une courte distance intérieurement à l'orifice (119) un prolongement déporté (129, 134) s'étendant sur les côtés pour fixation, de préférence par soudure ou par collage, respectivement à la plaque arrière (108) et à une partie déportée correspondante (135) prévue sur la plaque avant (110) de telle sorte que la partie principale de la plaque interne (109) est tenue à distance à la fois de la plaque arrière et de la plaque avant, cette plaque interne (109) ayant de préférence des bords latéraux rugueux ou pourvus de crans (140).

8. Distributeur de manchettes selon la revendication 7 caractérisé en ce qu'un bord coupant se trouve sur deux côtés de la plaque interne (109) immédiatement en arrière du prolongement (129), ce bord coupant étant soit réalisé par le profil de la plaque interne par profilage en bord coupant (131) éventuellement denté, de préférence légèrement incurvé vers l'extérieur, de la plaque interne (109), ce bord s'étendant dans le prolongement déporté (129, 134), soit constitué par un couteau (128) logé dans un évidement transversal ou incliné (127) immédiatement à proximité ou à une courte distance du prolongement déporté (129, 134), la plaque interne (109) ayant de préférence des bords latéraux rugueux ou pourvus de crans (140).

9. Distributeur de manchettes selon la revendication 7 caractérisé en ce que la plaque arrière (108) et la plaque interne (109) présentent à l'extrémité où est l'orifice respectivement une bride transversale inclinée vers le haut (120, 125) avec un angle $\alpha$ vers le haut par rapport au plan de la plaque arrière et de la plaque interne et en ce que la plaque avant (110) présente à l'extrémité où est l'orifice une bride transversale (121) inclinée d'un angle $\beta$ vers le haut par rapport au plan de la plaque avant, l'angle $\alpha$ étant supérieur à l'angle $\beta$ et compris entre 10° environ et 20° environ, de préférence entre 13° et 18° et étant plus avantageusement de 15° tandis que l'angle $\beta$ est plus petit de 4 à 6° que $\alpha$ et de préférence plus petit de 5° environ que $\alpha$.

10. Distributeur de manchettes selon la revendication 4 et l'une ou plusieurs des revendications 5 à 9, caractérisé en ce que les organes de fixation et d'étanchéité sont constitués par une bande adhésive ou un ruban adhésif (14) ayant une couche adhésive sur se deux faces, ce ruban étant de préférence en mousse de matière plastique, de préférence à alvéoles fermées, la couche adhésive utilisée pour la fixation du distributeur de manchettes à la paroi (15) d'une chambre (3) ayant un pouvoir adhésif vis-à-vis de cette paroi tel que le distributeur (7) peut y être fixé avec sécurité et en être retiré après usage, cette couche adhésive étant de préférence soluble à l'eau.

11. Distributeur de manchettes selon la revendication 4 et l'une ou plusieurs des revendications 9, 10, caractérisé en ce que les organes de fixation et d'étanchéité comprennent une couche d'espacement et d'étanchéité disposée sur la plaque arrière (109) le long de la totalité de sa périphérie, cette couche étant par exemple en mousse de matière plastique, et des organes mécaniques de fixation tels que, par exemple, des boutons-pression, de préférence du type dans lequel la pièce femelle est fixée à la plaque arrière et la pièce mâle est fixée à la face extérieure de la paroi de la chambre (3), ou des bandes Velcro fixées en permanence à la fois à la plaque arrière et à la paroi, ou des moyens d'encliquetage et d'agrafage à ressort, en matière plastique, avec une partie en relief saillante et légèrement arrondie s'avançant à partir de la paroi (15) et un élément de retenue correspondant à ouvertures disposé sur la plaque arrière (8; 108).

12. Distributeur selon la revendication 4 caractérisé en ce que le tube plat de distribution est réalisé entre une plaque arrière (208) et une plaque avant (210) qui est montée pivotante au moyen d'une charnière (227) par l'intermédiaire de la boîte de stockage (216) sur un bord transversal de la plaque arrière et qui est fixée, pendant l'utilisation, à proximité de la plaque arrière à l'aide de moyens de verrouillage coopérants (228, 229).

13. Distributeur de manchettes selon les revendications 4 et 12 caractérisé en ce que les moyens de guidage et de retenue sont constitués par une plaque interne (209) profilée de telle sorte que lorsqu'elle est introduite dans la manchette avant (201) elle est retenue dans l'intervalle plat limité entre la plaque arrière (208) et la plaque avant (210).

14. Distributeur de manchettes selon la revendication 13 caractérisé en ce que la plaque interne (209) comprend des protubérances transversales oblongues de guidage (232, 233) s'engageant dans des logements transversaux correspondants (225, 226, 230, 231) prévus sur la plaque arrière et la plaque avant, respectivement, dans lesquels une protubérance (233) et les logements correspondants (226, 230) ont de préférence un profil en V pour retenir la plaque interne quand la charge est appliquée.

15. Distributeur de manchettes selon les revendications 13 et/ou 14 caractérisé en ce qu'une fente (234) s'étend à partir de l'ouverture (212) de la plaque interne (209) jusqu'au bord arrière de celle-ci de sorte que cette plaque interne peut être adaptée à des bandes de largeur variable.

16. Distributeur de manchettes selon les revendications 13, 14 et/ou 15 caractérisé en ce que la plaque interne (209) est en pointe le long de la moitié substantiellement de ses bords latéraux (235) et elle comprend de préférence des entailles (236) d'une taille uniformément croissante en direction du milieu de cette plaque interne.

17. Distributeur de manchettes selon les revendications 12, 13, 14, 15 et/ou 16 caractérisé en ce que des encoches (238) sont taillées dans le bord supérieur (237) de la plaque interne (209), dans la protubérance (233), ces encoches facilitant le déchirement d'une manchette utilisée et retirée (201).

18. Distributeur de manchettes selon la revendication 12 caractérisé en ce que des organes mécaniques de fixation (220, 221, 222, 223) sont montés sur la plaque arrière (208) pour la fixation détachable du distributeur (207) sur le bord de l'ouverture d'entrée (2) en assurant l'étanchéité.

**Patentansprüche**

1. Ein Band wegwerfbarer Manschetten, die um und quer über Eintrittsöffnungen (2) einer Kammer (3) mit einer kontrollierten Atmosphäre angeordnet sind, welche Öffnungen dazu bestimmt sind, Hände einer Bedienungsperson einzuführen, dadurch gekennzeichnet, daß die wegwerfbaren Manschetten (1) von einem doppelschichtigen Material des Typs sind, welches im Perforations- und Einführbereich für die Hand dehnbar ist und nachfolgend an der Handwurzel oder am Arm dicht abschließt, daß die Manschetten in langen Bändern als ein abgeflachter Schlauch erzeugt und dann in handliche Längeneinheiten (17) geschnitten werden, die eine Vielzahl von wegwerfbaren Manschetten umfassen, daß zwischen den einzelnen Manschetten und quer zur Längsrichtung des Schlauches Abreißlinien (5) vorgesehen sind, und daß Bruchlinien (6) in jedem Längenabschnitt vorzugsweise im wesentlichen in der Mitte jeder Manschette angebracht sind, wobei diese Bruchlinien zwei einander kreuzende Linien sein können oder aber polygonal, kreisförmig oder sternförmig, wobei sie bevorzugt als ein Kreisbogen mit kurzen, geraden Bruchlinien (206a, 206b) ausgebildet sind, die von den Enden des Kreisbogens ausgehen und parallel zueinander und in einem Abstand von der Mittellinie einer Doppellängeneinheit (204).

2. Band nach Anspruch 1, dadurch gekennzeichnet, daß das doppelschichtige Material ein zähes, elastisch nachgiebiges Material und vorzugsweise ein Hochdruckpolyethylen in Schlauchform ist, wobei dieses Blattmaterial eine Dicke von 0,03—0,08 mm, vorzugsweise 0,04—0.06 mm und höchstvorzugsweise ungefähr 0,05 mm hat, wodurch die angedeuteten Bruchlinien (6) in Form von einander kreuzenden diagonalen Linien jeweils vorzugsweise eine Länge zwischen 2 und 5 cm, vorzugsweise ungefähr 3 cm haben.

3. Band nach Anspruch 1 dadurch gekennzeichnet, daß die Abreißlinien (205) quer zum Band verlaufen, so daß ein trapezförmiger Abschnitt zum Greifen auf einer Manschette ausgebildet ist, wenn eine zuvor benutzte Manschette abgerissen wurde, und daß ebenso an jeder Seite der Manschette (201) kurze Abreißlinien zum leichteren Abreißen ausgebildet sind.

4. Manschettenspender zum Anordnen um und quer über Einlaßöffnungen (2) einer Kammer (3) mit einer kontrollierten Atmosphäre, welche Öffnungen dazu bestimmt sind, die Hänger einer Person einzuführen, dadurch gekennzeichnet, daß der Spender (7; 107; 207) einen Speicherkasten (16; 116; 216) mit einer Zulieferung (17) einer handlichen Längeneinheit von schlauchförmigen wegwerfbaren Manschetten (1; 201) aus doppelschichtigem Material umfaßt, sowie ein flaches Spenderrohr (8, 10; 108, 110; 208, 210), welches mit dem Speicherkasten verbunden ist und eine innere Manschettenführungs- und Halteeinrichtung (9, 109; 209) umfaßt, welche von der Manschette umgeben ist, wobei Löcher (11, 12, 13; 111, 112, 113; 211, 212, 213) quer über das Spenderrohr verlaufen und sowohl in den breiten, flachen Wandplatten (8, 10; 108, 110; 208, 210) des Spenderrohres als auch in der Führungs- und Halteeinrichtung (9; 109; 209) angeordnet sind, welche Löcher im wesentlichen dieselbe Dimension haben wie die Einlaßöffnungen (2) der Kammer (3), und daß der Spender Befestigungs- und Abdichtglieder (14, 114; 220, 221) zum abnehmbaren abgedichteten Befestigen des Spender (7; 107; 207) an die glatte Außenfläche der Wand (15) der Kammer (3) und zum Umgeben zumindest eines der Einlaßöffnungen (2) der Kammer (3) umfaßt.

5. Manschettenspender nach Anspruch 4, dadurch gekennzeichnet, daß das flache Spenderrohr eine hintere Platte (8; 108) und eine vordere Platte (10; 110) umfaßt, die vorzugsweise durch Schweißen oder Kleben entlang drei Rändern (18, 23; 118, 123) an der hinteren Platte befestigt ist, und daß der flache Spender (bei 22; 122) gekröpft ist, um das flache Rohr zu bilden, wodurch die Speicherbox (16; 116) einen Teil der vorderen Platte (10; 110) bildet.

6. Manschettenspender nach Anspruch 3 und 4, dadurch gekennzeichnet, daß die Führungs- und Halteeinrichtung eine Kernplatte (9) ist, deren vom Ende der Speicherbox bzw. des Öffnungsendes des Spenderrohres abstehenden Ränder nach oben gebogen und so geformt sind, daß sie teilweise eine Führungsfläche (20) bzw. einen Abreißrand (21) für die quer über die Kernplatte passierende Manschette (1) und teilweise Mittel zum Lösen der haltenden Kernplatte in einem Abstand sowohl relativ zur hinteren als auch zur vorderen Platte (8, 10) bilden.

7. Manschettenspender nach Anspruch 4 und 5, dadurch gekennzeichnet, daß die Führungs- und Halteeinrichtung ein Kernplatte (109) ist, welche in einem kurzen Abstand innerhalb der Öffnung (119) einen gekröpften Vorsprung (129, 134) umfaßt, welcher zum Befestigen, vorzugsweise zum Schweißen oder Kleben, an die hintere Platte (108) bzw. einer entsprechenden Kröpfung (135) an der vorderen Platte (110) auf solche Weise, daß der Hauptabschnitt der Kernplatte (109) in einem Abstand sowohl zur hinteren als auch zur vorderen Platte befestigt ist, seitlich vorsteht, wobei die Kernplatte (109) vorzugsweise Seitenränder umfaßt, welche rauh oder mit Kerben (140) versehen sind.

8. Manschettenspender nach Anspruch 7, dadurch gekennzeichnet, daß eine scharfe Kante an beiden Seiten der Kernplatte (109) unmittelbar innerhalb des Vorsprungs (129) angeordnet ist, welche Kante beispielsweise entweder durch freies Ausbilden einer sägezahnförmigen Schneidkante (131), die vorzugsweise in der Kernplatte (109) leicht nach außen gekrümmt ist, wobei die Kante in den gekröpften Vorsprung (129, 134) verläuft, in der Kernplatte ausgebildet ist, oder ein Messer (128) ist, welches in einer Querausnehmung oder einer geneigten Ausnehmung (127) unmittelbar neben oder in kurzem Abstand innerhalb des gekröpften Vorsprunges (129, 134) angeordnet ist, und wobei die Kernplatte (109) vorzugsweise Seitenränder umfaßt, welche rauh oder mit Kerben (140) versehen sind.

9. Manschettenspender nach Anspruch 7, dadurch gekennzeichnet, daß die hintere Platte (108) und die Kernplatte (109) am Öffnungsende durch einen nach oben gebogenen Querflansch (120, 125) begrenzt sind, welcher Flansch in einem Winkel $\alpha$ von der Ebene der hinteren Platte bzw. der Kernplatte nach oben gebogen sind und daß die vordere Platte (110) am Öffnungsende durch einen Querflansch (121) begrenzt ist, welcher in einem Winkel $\beta$ von der Ebene der vorderen Platte nach oben gebogen ist, wobei $\alpha$ größer als $\beta$ ist und wobei

α zwischen ungefähr 10° und ungefähr 20°, vorzugsweise zwischen 13° und 18° und meist bevorzugt 15° beträgt, und wobei β 4—6° kleiner ist als α und vorzugsweise ungefähr 5° kleiner als α.

10. Manschettenspender nach Anspruch 4 und einem oder mehreren der Ansprüche 5 bis 9, dadurch gekennzeichnet, daß das Befestigungs- und Abdichtglied ein Klebstreifen oder ein Klebeband (14) ist, welches auf beiden Seiten eine Klebstoffbeschichtung trägt, und wobei das Band vorzugsweise einen geschäumten Kunststoff umfaßt, vorzugsweise mit geschlossenen Poren, und wodurch die zum Befestigen des Manschettenspenders an der Wand (15) der Kammer (3) verwendete Klebstoffschicht eine solche Haftung zur Wand besitzt, daß der Spender (7) zuverlässig befestigt und nach dem Gebrauch wieder davon abgenommen werden kann, wobei der Klebstoff vorzugsweise wasserlöslich ist.

11. Manschettenspender nach Anspruch 4 oder einem oder mehreren der Ansprüche 9 bis 10, dadurch gekennzeichnet, daß das Befestigungs- und Abdichtglied eine Beabstandungsabdichtschicht umfaßt, die an der hinteren Platte (109) und entlang dem gesamten Umfang desselben angeordnet ist, welche Schicht beispielsweise aus geschäumtem Kunststoff besteht, und daß das Befestigungs- und Abdichtglied mechanische Befestigungsglieder beispielsweise in Form von Druckknöpfen vorzugsweise des Typs umfaßt, bei dem das weibliche Teil an der hinteren Platte und das männliche Teil an der Außenseite der Wand der Kammer (3) befestigt ist, oder wie beispielsweise Velcro-Bänder, welche permanent sowohl an der hinteren Platte als auch an der Wand befestigt sind, oder längliche schnappschloßähnliche Fangmittel aus Kunststoff mit leicht gekrümmtem und angespitztem Vorsprung, welcher von der Wand (15) vorsteht und eine entsprechendes Halteglied mit an der hinteren Platte (8; 108) angebrachten Öffnungen.

12. Manschettenspender nach Anspruch 4, dadurch gekennzeichnet, daß das flache Spenderrohr zwischen einer hinteren Platte (208) und einer vorderen Platte (210) ausgebildet ist, welche mittels eines Gelenks (227) an der Speicherbox (260) drehbar an einem Querrand der hinteren Platte befestigt ist und daß das flache Spenderrohr beim Gebrauch mittels kooperierender Verriegelungsmittel (228, 229) neben der hinteren Platte befestigt ist.

13. Manschettenspender nach Anspruch 4 und 12, dadurch gekennzeichnet, daß die Führungs- und Halteeinrichtung eine Kernplatte (209) ist, die auf solche Weise geformt ist, daß, wenn sie in die vordere Manschette (201) eingeführt ist, in einem flachen Beabstandungsraum gehalten ist, welcher zwischen der hinteren Platte (208) und der vorderen Platte (210) ausgebildet ist.

14. Manschettenspender nach Anspruch 13, dadurch gekennzeichnet, daß die Kernplatte (209) längliche Querführungsnocken (232, 233) umfaßt, welche in entsprechende Querausnehmungen (225, 226, 230, 231) in der hinteren bzw. der vorderen Platte eingreifen, von denen eine Nocken (233) und die entsprechenden Ausnehmungen (226, 230) vorzugsweise V-förmig sind, um die Kernplatte zu halten, wenn auf diese eine Last aufgebracht wird.

15. Manschettenspender nach Anspruch 13 und/oder 14, dadurch gekennzeichnet, daß ein Schlitz (234) vom Loch (212) der Kernplatte (209) zur hinteren Kante derselben auf solche Weise verläuft, daß die Kernplatte an Bänder verschiedener Breite angepaßt werden kann.

16. Manschettenspender nach Anspruch 13, 14 und/oder 15, dadurch gekennzeichnet, daß die Kernplatte (209) entlang im wesentlichen der Hälfte ihrer Seitenränder (235) angespitzt ist und vorzugsweise Einschnitte (236) einer in Richtung auf die Mitte der Kernplatte gleichmäßig zunehmender Größe umfaßt.

17. Manschettenspender nach Anspruch 12, 13, 14, 15 und/oder 16, dadurch gekennzeichnet, daß die Einschnitte (238) im oberen Rand (237) der Kernplatte (209) im Nocken (233) ausgebildet sind, welche Einschnitte das Abreißen einer zu entfernenden gebrauchten Manschette (201) erleichtern.

18. Manschettenspender nach Anspruch 12, dadurch gekennzeichnet, daß mechanische Befestigungsglieder (220, 221, 222, 223) an der hinteren Platte (208) für das abnehmbare Befestigen des Spenders (207) am Rand der Einlaßöffnung (2) während des Abdichtens befestigt sind.

Fig.1

Fig.2

Fig.3

*Fig.4*

*Fig.5*

*Fig.6*

*Fig.7*

Fig.8

Fig.12

Fig.9

Fig.10

Fig.11

Fig.13

Fig.14

Fig.15

Fig.16

Fig.17

Fig.18